# EUROPÄISCHE PATENTSCHRIFT

(11) **EP 1 541 296 B1**
(45) Veröffentlichungstag und Bekanntmachung des Hinweises auf die Patenterteilung: **26.03.2008**
(21) Anmeldenummer: 04028506.6
(22) Anmeldetag: 02.12.2004
(51) Int. Cl.: B25J 19/00

(54) **Handhabungsgerät, wie Industrieroboter, mit Spülräumen, und Verfahren zum Beeinflussen einer Umgebungsbedingung in einem solchen**
Manipulator, as an industrial robot, with rinsing compartments, and process for influencing a surrounding condition in such a manipulator
Manipulateur, comme un robot industriel, avec enceintes de rinçage, et procédé pour influencer un parametre ambiant dans un tel manipulateur

(30) Priorität: 10.12.2003 DE 10357609
(43) Veröffentlichungstag der Anmeldung: 15.06.2005
(73) Patentinhaber: KUKA Roboter GmbH, 86165 Augsburg (DE)
(72) Erfinder: Markert, Joachim, 86163 Augsburg (DE); Merk, Günther, 86450 Altenmünster (DE)
(74) Vertreter: Lempert, Jost

(56) Entgegenhaltungen:
- EP-A- 0 245 530
- DE-A- 3 627 745
- DE-U- 9 010 796
- US-A- 4 698 568
- US-A- 4 972 731
- US-A- 5 212 432
- US-A- 5 949 209

## Beschreibung

Die Erfindung betrifft ein Handhabungsgerät, wie Mehrachs-Industrieroboter, gemäß dem Oberbegriff des Anspruchs, insbesondere zum Einsatz in kontaminationsgefährdeter Umgebung, mit einer Anzahl von mit einem Spülmedium beaufschlagbaren Spülräumen im Bereich von Antriebseinheiten des Handhabungsgeräts. Weiterhin betrifft die Erfindung ein Verfahren gemäß dem Oberbegriff des Anspruchs 22 zum Beeinflussen zumindest einer Umgebungsbedingung, wie Temperatur, Feuchtigkeit, Druck, Verschmutzung und/oder Keimbelastung, im Bereich von Antriebseinheiten des Handhabungsgeräts, wie eines Mehrachs-Industrieroboters.

Ein solches Gerät und ein solches Verfahren und z.B. aus der DE-A-36 27 745 bekannt.

Handhabungsgeräte, insbesondere in automatisierter Form als Mehrachs-Industrieroboter, im Folgenden kurz als Roboter bezeichnet, finden heutzutage auf vielfältigen Gebieten der Technik Verwendung. Dabei ist bei einem Einsatz derartiger Roboter in kontaminationsgefährdeter Umgebung, wie in der Nahrungsmittel verarbeitenden Industrie oder der Pharmaindustrie, streng darauf zu achten, keine geltenden Hygienevorschriften durch Freisetzen von Abriebpartikeln und/oder Schmierstoffdämpfen zu verletzen. Eine Quelle für derartige Kontaminationen sind insbesondere die Gelenkbereiche des Roboters, in denen die Antriebseinheiten für die bewegten Teile des Roboters mit ihren Motoren und diversen relativ zueinander bewegten Bauteilen angeordnet sind, was darüber hinaus zum einen das Vorhandensein von Schmierstoffen und andererseits offener Schnittstellen in der Roboterstruktur bedingt, so dass es an diesen Stellen insbesondere in Folge von Reibungseffekten zu den genannten Kontaminationswirkungen kommt.

Um eine dadurch bedingte Einschränkung der Einsetzbarkeit des Roboters entgegenzuwirken, schlägt die WO 00/29177 vor, die Gesamtheit der Antriebseinrichtungen eines Roboters mit einem druckdichten Gehäuse zu umgeben und in diesem zu Kühlungszwecken für eine geschlossene Strömung eines Kühlgases zu sorgen.

Dabei ist insbesondere als nachteilig anzusehen, dass aufgrund der offenbarten Verkleidung des gesamten Handhabungsgeräts in der Regel, insbesondere im Falle eines Sechsachs-Industrieroboters, mit einer starken Einschränkung der Beweglichkeit des Handhabungsgeräts zu rechnen ist. Darüber hinaus ist es aufgrund des geschlossenen Strömungsverlaufs beim Gegenstand der WO 00/29177 nicht möglich, Abrieb, Feuchtigkeit und anderweitige Verschmutzungen aus dem Inneren des Gehäuses abzuführen, so dass es dort ggf. zum Entstehen von Bakteriennestern und damit zu einer erhöhten Kontaminationsgefahr kommt.

Weiterhin ist es bei Robotern zum Zwecke des Explosionsschutzes bekannt, den gesamten Roboter oder einzelne seiner Antriebseinheiten in einem gekapselten Gehäuse unterzubringen: Die EP 0 203 202 A1 zeigt einen Industrieroboter, in dessen Innerem ein zusammenhängender, mit einem Druckmedium beaufschlagbarer Spülraum für die Antriebseinheiten vorgesehen ist. Beim Gegenstand der EP 0 245 530 A1 ist ein Motormittel für eine Roboterhand in einer mit einem Druckmedium beaufschlagbaren Verkleidung angeordnet; beim Gegenstand der DE 36 27 745 A1 sind Antriebseinheiten eines Industrieroboters in einzelnen, luftdichten Behältern angeordnet, in die Druckluft als Schutzgas eingeführt werden kann.

Der Erfindung liegt die Aufgabe zugrunde, ein Verfahren und ein Handhabungsgerät der eingangs genannten Art dahingehend weiterzuentwickeln, dass eine sichere Einsetzbarkeit des Handhabungsgeräts in kontaminationsgefährdeter Umgebung in konstruktiv einfacher und damit insbesondere kostengünstiger Weise möglich ist.

Die Aufgabe wird durch ein Handhabungsgerät gemäß Anspruch 1 und durch ein Verfahren gemäß Anspruch 22 gelöst.

Insbesondere im Hinblick auf die oben dargelegte Problematik und Aufgabenstellung sieht eine bevorzugte Ausgestaltung des erfindungsgemäßen Verfahrens vor, dass der Spülraum mit Überdruck beaufschlagt wird sowie eine bevorzugte Ausgestaltung des erfindungsgemäßen Handhabungsgeräts, dass die Spülräume druckbeaufschlagt sind. Das Spülmittel wird also in die Spülräume mit einem, wenn auch gegebenenfalls nur sehr geringen Überdruck eingebracht, das heißt sie werden definitiv mit dem gasförmigen Spülmittel gespült, das in die Spülräume eingeblasen wird und über Widerstände bildende Auslässe abgelassen wird, so dass gemäß dieser Ausgestaltung in den Spülräumen immer ein zumindest geringer Überdruck aufrechterhalten wird. Damit wird für eine Kühlwirkung (für die Antriebseinheiten) und aufgrund eines trockenen Spülmittels auch einem Trocknungseffekt, insbesondere das kontrollierte Eindringen von Schmutz aus der Umgebung des Roboters vermieden, so dass ein erfindungsgemäß ausgestalteter Roboter in einer nicht reinen oder verschmutzten Umgebung eingesetzt werden kann. Im Übrigen können die Parameter des Spülmittels, wie Wärme, Trockenheit in geeigneter Weise gesteuert und eingestellt werden, wobei des Spülmedium mit einem Desinfektionsanteil versehen ist. Hierdurch wird der hygienische Einsatz eines Roboters, insbesondere im Lebensmittelbereich, ermöglicht. Insbesondere sind die Abdichtungen der Spülräume derart, dass eine hinreichende Hygiene gewahrt ist und die Umgebung nicht durch biologische Kontamination gefährdet ist.

Eine Weiterbildung des erfindungsgemäßen Verfahrens sieht vor, dass ein Zuführen und/oder Abführen des Spülmediums für jeden Spülraum separat gesteuert wird, was zu einer weiteren Erhöhung der Einsatzflexibilität des Roboters führt. Entsprechend ist nach einer Weiterbildung des erfindungsgemäßen Handhabungsgeräts ein Druck des Spülmediums in jedem Spülraum separat steuerbar.

Das erfindungsgemäße Verfahren kann dazu eingesetzt werden, gezielt auf Umgebungsbedingungen im Bereich von Antriebseinheiten eines Handhabungsgeräts einzuwirken. Zum Erreichen einer Kühlwirkung sieht eine äußerst bevorzugte Weiterbildung des erfindungsgemäßen Verfahrens vor, dass das Spülmedium zumindest nach einem Durchströmen eines Spülraums gekühlt wird. Entsprechend ist zur Feuchtigkeitsregulierung vorgesehen, dass das Spülmedium zumindest nach einem Durchströmen eines Spülraums getrocknet wird. Zum Entfernen von Verschmutzungen, wie Abriebpartikeln, kann weiterhin vorgesehen sein, dass das Spülmedium zumindest nach einem Durchströmen eines Spülraums gefiltert wird. Um einer Ausbildung von Kontaminationsherden, wie Bakteriennestern, vorzubeugen, sieht das erfindungsgemäße verfahren vor, dass das Spülmedium vor einem Durchströmen eines Spülraums in einem Desinfektionsmittel versetzt wird.

Alternativ kann es sich bei einem Strom des Spülmediums durch die Spülräume um einen offenen oder einen geschlossenen Kreislauf handeln. Dementsprechend sehen weitere Ausgestaltungen des erfindungsgemäßen Verfahrens vor, dass das Spülmedium nach einem Durchströmen eines der Spülräume entweder an die Umgebung abgegeben oder dem Spülraum erneut zugeführt wird. Entsprechende Weiterbildungen des erfindungsgemäßen Handhabungsgeräts sehen vor, dass Zuführ- und Abführschläuche für zumindest einen Spülraum einen geschlossenen Kreislauf bilden bzw. dass ein aus zumindest einem Spülraum abgeführtes Medium an die Umgebung abgebbar ist.

Zum Erreichen einer optimalen Einflussnahme auf die genannten Umgebungsbedingungen sieht eine weitere Variante des erfindungsgemäßen Verfahrens vor, dass das Spülmedium in wenigstens einem Spülraum in eine definierte Strömungsbewegung versetzt wird.

Um gezielt ein Eindringen von Substanzen, wie Feuchtigkeit, in den Roboter zu verhindern, wird vorzugsweise das Spülmedium wenigstens einem Spülraum mit einem gegenüber einem Umgebungsdruck erhöhten Druck zugeführt. Es kann jedoch auch sinnvoll sein, das Spülmedium wenigstens einem Spülraum mit einem gegenüber einem Umgebungsdruck verminderten Druck zuzuführen, bzw. durch die Spülräume zu saugen, beispielsweise wenn gezielt ein Austreten von Substanzen aus dem Roboter in die Umgebung vermieden werden soll.

Zwecks einer möglichst einfachen und kostengünstigen Ausgestaltung des erfindungsgemäßen Handhabungsgeräts kann das Spülmedium über extern am Handhabungsgerät angeordnete Schläuche zu- und/oder abführbar sein. Vorzugsweise ist dabei eine Anzahl der Zuführ- und/oder Abführschläuche zusammen mit einer Kabelanordnung zur Versorgung und Steuerung der Antriebseinheiten verlegt, wobei in äußerst bevorzugter Weiterbildung des Erfindungsgegenstands das Spülmedium über einen Schutzschlauch der Kabelanordnung abführbar ist. Auf diese Weise werden die bei einem Handhabungsgerät der eingangs genannten Art regelmäßig bereits vorhandenen Bauteile optimal im Sinne der Erfindung mitbenutzt.

Aus den vorstehend bereits genannten Erwägungen sehen weitere Ausgestaltungen des erfindungsgemäßen Handhabungsgeräts vor, dass der Druck des Spülmediums in wenigstens einem Spülraum oberhalb eines Umgebungsdrucks oder in wenigstens einem Spülraum unterhalb des Umgebungsdrucks liegt. Dabei liegt ein Überdruck vorzugsweise bei 0,1-1,0 bar. Um einen Unterdruck in den Spülräumen herzustellen, ist weiterhin vorgesehen, dass das Spülmedium aus wenigstens einem Spülraum mittels einer Absaugeinrichtung absaugbar ist.

Um im Sinne des Verfahrens eine definierte Strömungsbewegung in den Spülräumen zu erzeugen, sieht eine bevorzugte Ausgestaltung des erfindungsgemäßen Handhabungsgeräts vor, dass wenigstens ein Spülraum Einlassmittel oder Ablenkmittel zum Beeinflussen einer Strömung des Spülmediums aufweisen.

Als Druckmedium kommt aus handhabungstechnischen Gründen vorzugsweise ein Gas oder Gasgemisch und in äußerst bevorzugter Ausgestaltung in wenigstens einem Spülraum Luft zum Einsatz. Für bestimmte Anwendungen ist jedoch auch der Einsatz eines Inertgases als Spülmedium in wenigstens einem Spülraum möglich und vorgesehen.

Weiterbildungen des erfindungsgemäßen Handhabungsgeräts sehen vor, dass dieses eine Trockeneinrichtung und/oder eine Filtereinrichtung und/oder eine Wärmetauscheinrichtung zur gezielten Konditionierung des Spülmediums aufweist.

In Verbindung speziell mit einem Sechsachs-Industrieroboter ist weiterhin vorgesehen, dass zumindest ein Spülraum für die entsprechenden Antriebseinheiten im Bereich einer Drehachse eines Karussells und der Schwenkachse einer Schwinge eines Sechsachs-Industrieroboters angeordnet ist. Ebenso kann zumindest ein Spülraum für die entsprechenden Antriebseinheiten eines Roboterarms bzw. einer Roboterhand im Bereich der Schwenkachse des Roboterarms eines Sechsachs-Industrieroboters angeordnet sein.

Weiter Eigenschaften und Vorteile der Erfindung ergeben sich aus der Beschreibung eines Ausführungsbeispiels anhand der Zeichnungen. Es zeigt:
- Fig. 1: ein erfindungsgemäßes Handhabungsgerät in Seitenansicht;
- Fig. 2: das Handhabungsgerät der Fig. 1 anhand eines Blockschaltbildes; und
- Fig. 3: eine Schnittdarstellung eines Spülraums des erfindungsgemäßen Handhabungsgeräts der Fig. 1.

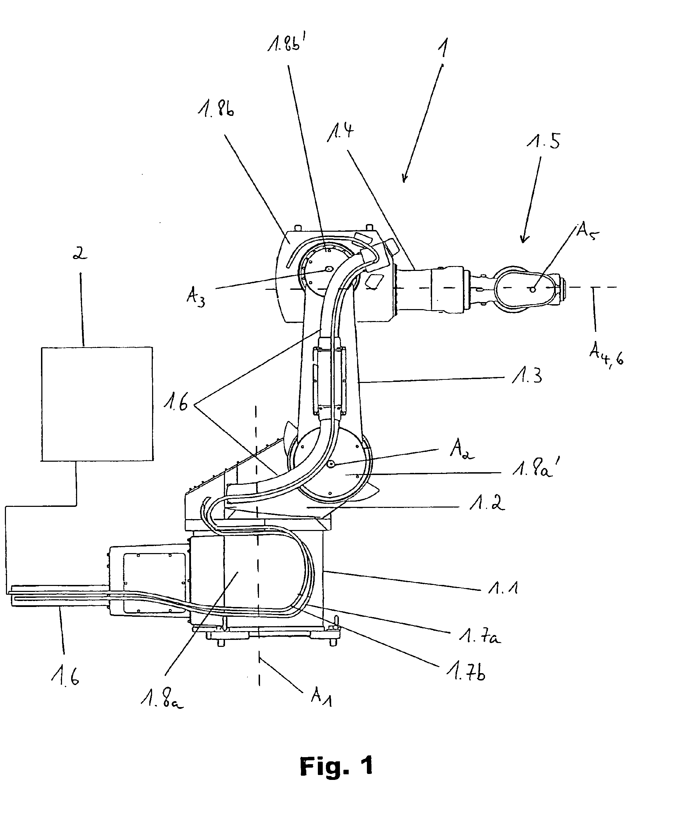

Die Fig. 1 zeigt in einer Seitenansicht ein erfindungsgemäßes Handhabungsgerät in Form eine Mehrachs-Industrieroboters 1. Dieser weist ein Grundgestell 1.1, ein Karussell 1.2, eine Schwinge 1.3, einen Roboterarm 1.4 sowie eine Roboterhand 1.5 auf, wobei die einzelnen Teile 1.1-1.5 des Roboters 1 und ggf. deren weitere Unterbestandteile relativ zueinander Schwenk- bzw. Drehbewegungen um Achsen A₁-A₆ ausführen können. Zur Energieversorgung und Steuerung seiner Antriebseinheiten weist der Roboter 1 teilweise extern entlang seiner Struktur verlegte Kabelpakete auf (nicht erkennbar) die insbesondere zum Schutz vor mechanischen Beschädigungen von einem Schutzschlauch 1.6 umgeben sind. Zusätzlich zu dem genannten Schutzschlauch 1.6 sind außerhalb der Struktur des Roboters 1 Schläuche 1.7a, 1.7b für ein Spülmedium vorgesehen und zumindest bereichsweise zusammen mit dem Schutzschlauch 1.6 verlegt.

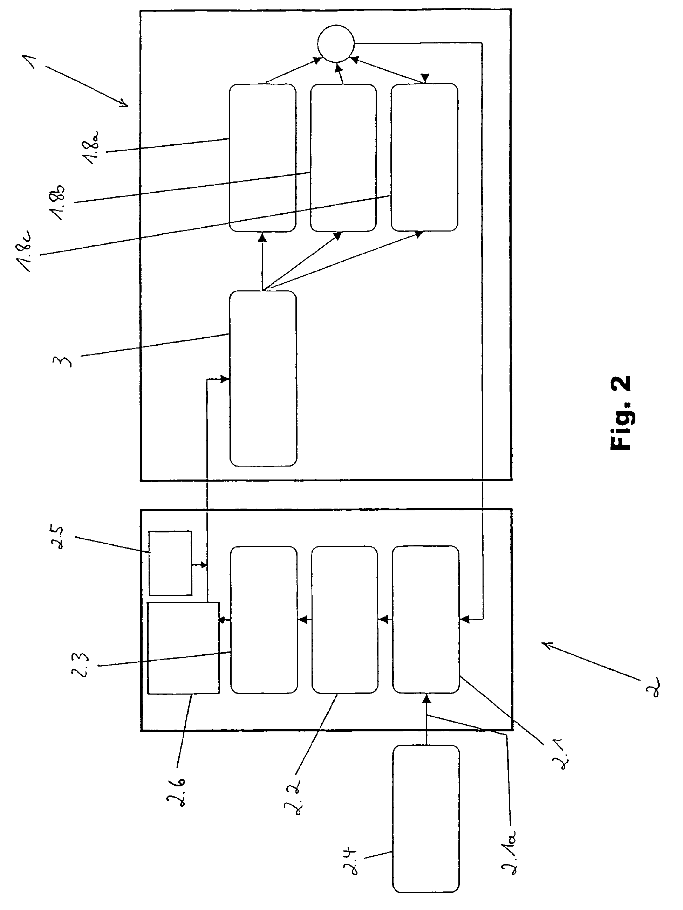

Der Roboter 1 weist in der dargestellten Ausgestaltung in den Bereichen Grundgestell-Karussell-Schwinge und Schwinge-Arm-Hand zwei Spülräume 1.8a, 1.8b auf, die die Motoren und Getriebe (Antriebseinheiten) der Achsen A1 und A2 bzw. der Achse A3 sowie der Handachsen A4-A6 umfassen. Die Spülräume 1.8a, 1.8b sind über die Schläuche 1.7a bzw. 1.7b mit einem Spülmedium, beispielsweise zu Kühl-, Trocken- oder Desinfektionszwecken, beaufschlagbar. Außerhalb des Roboters 1, jedoch mit diesem über den Schutzschlauch 1.6 und die darin geführten Versorgungs- und Steuerleitungen (nicht gezeigt) verbunden, weist das erfindungsgemäße Handhabungsgerät eine Aufbereitungseinrichtung 2 für das Spülmedium auf, die nachfolgend anhand der Fig. 2 detailliert beschrieben wird. Die Aufbereitungseinrichtung 2 ist erfindungsgemäß vorzugsweise außerhalb eines kontaminationsgefährdeten Bereichs (Hygienebereichs), in dem sich der Roboter 1 befindet, angeordnet.

Die Spülräume 1.8a, 1.8b sind erfindungsgemäß dicht gekapselt und weisen zu diesem Zweck insbesondere Abdeckungen 1.8a', 1.8b' auf, die mit entsprechend geeigneten Dichtmitteln (hier nicht gezeigt) versehen sind.

Die Abfuhr des Spülmediums aus den Spülräumen 1.8a, 1.8b erfolgt bei dem Roboter 1 der Fig. 1 über den Schutzschlauch 1.6. Alternativ können jedoch auch zusätzliche Abführschläuche analog zu den Schläuchen 1.7a, 1.7b zum Abführen des Spülmediums vorgesehen sein. Nach Maßgabe der Aufbereitungseinrichtung 2 (vergleiche Fig. 2) lassen sich die Spülräume 1.8a, 1.8b des Roboters 1 teilweise mit gegenüber einem Umgebungsdruck erhöhten (Überdruck) oder verminderten Druck (Unterdruck) beaufschlagen, wobei letztere Alternative insbesondere für Reinraum-Anwendungen interessant ist.

Insbesondere aufgrund der erfindungsgemäßen Rückführung des Spülstroms über den Schutzschlauch 1.6 ergibt sich für die erfindungsgemäße Spülanordnung ein minimaler und daher entsprechend kostengünstiger Installationsaufwand.

Die Fig. 2 zeigt anhand eines Blockschaltbildes nochmals das erfindungsgemäße Handhabungsgerät 1 der Fig. 1 zusammen mit der Aufbereitungseinrichtung 2 für das Spülmedium. Demzufolge weist die Aufbereitungseinrichtung 2 eine Trocknungseinrichtung 2.1, eine Kompressoreinrichtung 2.2 sowie eine Temperiereinrichtung 2.3, beispielsweise eine Kühleinrichtung, auf. Die Trocknungseinrichtung 2.1 ist erfindungsgemäß über eine Zuleitung 2.1a mit einem Spülmedium-Reservoir 2.4, bei Verwendung von Luft als Spülmedium also beispielsweise mit der Umgebungsluft, verbunden. Weiterhin weist die Aufbereitungseinrichtung 2 noch eine Zuführeinrichtung 2.5 für ein Desinfektionsmittel sowie eine Filtereinrichtung 2.6 zum Herausfiltern von Partikeln, wie Abriebpartikeln, aus dem Spülmedium auf.

Der Roboter 1 kann grundsätzlich gemäß der Darstellung der Fig. 2 neben den bereits in Fig. 1 dargestellten Spülräumen 1.8a, 1.8b noch weitere Spülräume 1.8c aufweisen. Diese werden erfindungsgemäß über eine vorzugsweise innerhalb des Roboters angeordnete Druck-Regel-/Verteil-Einrichtung 3 mit dem Spülmedium versorgt. Dabei ist der Strömungsweg des Spülmediums in der Fig. 2 durch Pfeile angegeben.

Über die Zuführeinrichtung 2.5 in der Aufbereitungseinrichtung 2 wird dem Spülmedium ein geeignetes Desinfektionsmittel zugeführt, um die Spülräume 1.8a-1.8c auch mit beispielsweise antibakterieller Wirkung zu reinigen. Auf diese Weise kann garantiert werden, dass sich im Inneren des Roboters 1 keine Bakteriennester bilden. Eine derartige Spülung lässt sich erfindungsgemäß auch in längeren Intervallen anwenden, wobei jedoch ein Dauereinsatz gerade im Lebensmittelbereich aufgrund einer möglichen Kontanimation der Lebensmittel nicht sinnvoll erscheint.

Neben der bereits erwähnten Verwendung des Gasgemisches Luft als Spülmedium zur Spülung der Spülräume 1.8a-1.8c kann zu Sondereinsatzzwecken auch ein inertes Gas (z.B. Stickstoff) als Spülmedium zum Einsatz kommen, in beiden Fällen unter Zusatz eines Desinfektionsmittels.

Das Spülmedium wird dem Roboter 1 gemäß dem Ausführungsbeispiel der Fig. 2 durch den Kompressor 2.2 mit Überdruck zugeführt. Wenn das Spülmedium zu feucht und/oder zu warm ist, um die möglichen Aufgaben einer Trocknung und/oder Kühlung in ausreichendem Maße zu erfüllen, muss das einzuspeisende Spülmedium vorher entsprechend temperiert und getrocknet werden. Das geschieht innerhalb der Aufbereitungseinrichtung durch die Trocknungseinrichtung 2.1 bzw. die Temperiereinrichtung (Kühleinrichtung) 2.3. Dabei ist es unerheblich, ob das Spülmedium in einem offenen Kreislauf oder einem geschlossenen Kreislauf - wie in der Fig. 2 gezeigt - fließt. Alternativ zur Ausgestaltung der Fig. 2 kann das Spülmedium nach ein- oder mehrmaligem Durchströmen der Spülräume 1.8a-1.8c an die Umgebung abgegeben werden, vorzugsweise wenn es sich bei dem Spülmedium um Luft handelt, oder nach einer Aufbereitung in der Aufbereitungseinrichtung 2 erneut in den Roboter 1 geleitet werden.

Der im Rahmen der Erfindung erreichbare Spülmedium-Strom lässt sich vorteilhafterweise zum Kühlen von Antriebseinheiten des Roboters 1 einsetzen, da bei diesen insbesondere durch die Kapselung die bei Betrieb notwendige Wärmeabfuhr nur stark eingeschränkt möglich ist. Darüber hinaus können starke Temperaturschwankungen im Betrieb und im abgeschalteten Zustand zu einer Ansammlung von Kondenswasser im Inneren des Roboters 1 führen. Solches Kondenswasser wird durch ein trockenes Spülmedium abgeführt, wobei die Erwärmung durch die Motoren und Getriebe diesen Prozess noch unterstützt. Alternativ oder zusätzlich kann das Spülmedium aber auch in Ruhephasen des Roboters strömen, um auch dann eine Kondenswasserbildung zu verhindern. Weiterhin lässt sich durch einen definierten Überdruck im Inneren der Spülräume des Roboters ein Eindringen von Schmutz und Spritzwasser, insbesondere während einer Reinigungsphase, durch wirksames Unterstützen von Dichtmitteln, wie Dichtlippen oder dergleichen, erreichen. Ein bevorzugtes Maß sind hierbei Überdrücke im Bereich von 0,1-0,5 bar. Es ist jedoch wünschenswert, während einer Reinigung des Roboters, beispielsweise mit einem Hochdruckreiniger, den Druck in den Spülräumen zwecks einer weitergehenden Unterstützung der Dichtungen deutlich zu erhöhen, damit ein Hochdruckstrahl eines Reinigungsgeräts die Dichtungen der Spülräume nicht unterwandern kann. Technisch sinnvolle Werte für den Überdruck liegen hierbei im Bereich von 0,5-1 bar. Eine Gefahr der Beschädigung von Dichtungen ist hierbei grundsätzlich ausgeschlossen, da die Roboterachsen während einer Reinigung in der Regel nicht oder nur sehr langsam verfahren werden.

Die Druck-Regel-/Verteileinrichtung 3 dient erfindungsgemäß zur Steuerung einer Menge des Spülmediums in den Spülräumen 1.8b-1.8c, indem sie einen Innendruck in diesen Räumen begrenzt. Das gesamte eingebrachte Volumen des Spülmediums ergibt sich dann aus dem durch das Kompressormittel 2.2 aufgebrachten Druck und einem Strömungswiderstand in der Abführleitung 1.6 für das Spülmedium. Es ist hier bei einer Weiterbildung des Erfindungsgegenstands auch möglich, den Druck und das Spülmedium-Volumen zusätzlich durch weitere Beeinflussungsmittel (nicht gezeigt), wie eine Drosselklappe in der Abluftleitung, zu beeinflussen. Wenn zusätzlich zu dem Kompressormittel 2.2 in der Aufbereitungseinrichtung 2 noch ein geeignetes Pumpmittel (nicht gezeigt) vorgesehen wird, kann das Spülmedium im Falle zu hoher Strömungswiderstände in der Abführleitung auch gezielt abgesaugt werden. Entsprechend sind mittels eines derartigen Pumpmittels auch Unterdrücke im Bereich der Spülräume 1.8a-1.8c, wie vorstehend bereits erläutert, erzeugbar. Wenn in einer Weiterbildung des Gegenstands der Fig. 2 für jeden Spülraum 1.8a, 1.8b, 1.8c eine separate Druck-Regel- und Verteileinrichtung 3 zum Einsatz kommt, kann die Menge des Spülmediums an unterschiedlichen Stellen je nach Bedarf separat dosiert werden.

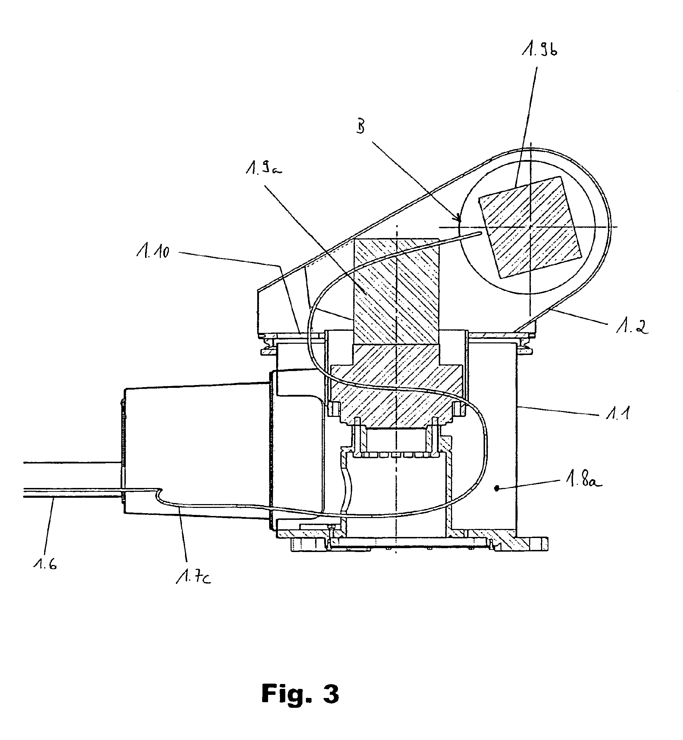

Wichtig für die Funktionalität des vorstehend beschriebenen, erfindungsgemäßen Spülkonzepts ist eine definierte Strömung des Spülmediums innerhalb der Spülräume (1.8a-1.8c). Diese ist erfindungsgemäß so gestaltet, dass sie sowohl einem Austrag von Feuchtigkeit als auch zu Kühlzwecken geeignet ist. Die Strömungsführung erfolgt durch konstruktive Maßnahmen im Bereich der Spülräume 1.8a-1.8c und ist nachfolgend anhand der Fig. 3 detailliert erläutert.

Die Fig. 3 zeigt anhand einer Schnittansicht detailliert eine Ausgestaltung des erfindungsgemäßen Roboters 1 im Bereich des Spülraums 1.8a. Letzterer ist im Bereich des Grundgestells 1.1 und des Karussells 1.2 ausgebildet und enthält gemäß der Fig. 3 insbesondere die Motoren 1.9a, 1.9b für die erste und zweite Roboterachse A₁ bzw. A₂. Dargestellt ist weiterhin ein weiterer Schlauch 1.7c zum Zuführen des Spülmediums. Dieser ist im Inneren des Spülraums 1.8a dergestalt geführt, dass in einem Zuleitungsbereich B eine gezielte Zuleitung des Spülmediums zum Motor 1.9b für die zweite Roboterachse A₂ erfolgt. Der Rückstrom des Spülmediums wird erfindungsgemäß über die Abführleitung 1.6 geführt. Aufgrund der dargestellten speziellen Anordnung eines Durchlasses 1.10 für das Spülmedium in einem Bereich des Spülraumes 1.8a, der vom Motor 1.9b gesehen hinter dem Motor 1.9a für die erste Motorachse A₁ liegt, wird innerhalb des Spülraums 1.8a ein gezielter Strömungsverlauf des Spülmediums von dessen Zuleitung im Bereich B an dem Motor 1.9a vorbei durch den Durchlass 1.10 in Richtung der Abführleitung 1.6 erzeugt. Durch die vorstehend beschriebene Strömungsführung wird im Inneren des Spülraums 1.8a eine definierte Strömung des Spülmediums erreicht, so dass diese in optimierter Weise zum Austrag von Feuchtigkeit und zu Kühlzwecken geeignet ist.

## Patentansprüche

1. Handhabungsgerät, wie Mehrachs-Industrieroboter, insbesondere zum Einsatz in kontaminationsgefährdeter Umgebung, mit einer Anzahl von mit einem Spülmedium beaufschlagbaren Spülräumen im Bereich von Antriebseinheiten des Handhabungsgeräts, wobei einer Mehrzahl von Gruppen von Antriebseinheiten jeweils ein eigener Spülraum (1.8a, 1.8b) zugeordnet ist, **dadurch gekennzeichnet, dass** das Spülmedium in wenigstens einem Spülraum (1.8a, 1.8b) mit desinfizierenden Substanzen versetzt ist.

2. Handhabungsgerät nach Anspruch 1, **dadurch gekennzeichnet, dass** die Spülräume (1.8a, 1.8b) druckbeaufschlagt sind.

3. Handhabungsgerät nach Anspruch 1 oder 2, **dadurch gekennzeichnet, dass** das Spülmedium über extern am Handhabungsgerät (1) angeordnete Schläuche (1.6, 1.7a, 1.7b) zu- und/oder abführbar ist.

4. Handhabungsgerät nach einem der Ansprüche 1 bis 3, **dadurch gekennzeichnet, dass** eine Anzahl der Zuführ- und/oder Abführ-Schläuche (1.7a, 1.7b) zusammen mit einer Kabelanordnung zur Versorgung und Steuerung der Antriebseinheiten verlegt sind.

5. Handhabungsgerät nach Anspruch 3 oder 4, **dadurch gekennzeichnet, dass** das Spülmedium über einen Schutzschlauch (1.6) der Kabelanordnung abführbar ist.

6. Handhabungsgerät nach einem der Ansprüche 2 bis 4, **dadurch gekennzeichnet, dass** die Zuführ- und Abführschläuche (1.6, 1.7a, 1.7b) für zumindest einen Spülraum (1.8a, 1.8b) einen geschlossenen Kreislauf bilden.

7. Handhabungsgerät nach einem der Ansprüche 2 bis 4, **dadurch gekennzeichnet, dass** ein aus zumindest einem Spülraum (1.8a, 1.8b) abgeführtes Spülmedium an die Umgebung abgebbar ist.

8. Handhabungsgerät nach einem der Ansprüche 1 bis 6, **dadurch gekennzeichnet, dass** ein Druck des Spülmediums in jedem Spülraum (1.8a, 1.8b) separat steuerbar ist.

9. Handhabungsgerät nach einem der Ansprüche 1 bis 7, **dadurch gekennzeichnet, dass** der Druck des Spülmediums in wenigstens einem Spülraum (1.8a, 1.8b) oberhalb eines Umgebungsdruckes liegt.

10. Handhabungsgerät nach einem der Ansprüche 1 bis 8, **dadurch gekennzeichnet, dass** ein Überdruck bei 0,1-1,0 bar liegt.

11. Handhabungsgerät nach einem der Ansprüche 1 bis 9, **dadurch gekennzeichnet, dass** der Druck des Spülmediums in wenigstens einem Spülraum (1.8a, 1.8b) unterhalb eines Umgebungsdruckes liegt.

12. Handhabungsgerät nach einem der Ansprüche 1 bis 10, **dadurch gekennzeichnet, dass** das Spülmedium aus wenigstens einem Spülraum (1.8a, 1.8b) mittels einer Absaugeinrichtung absaugbar ist.

13. Handhabungsgerät nach einem der Ansprüche 1 bis 12, **dadurch gekennzeichnet, dass** wenigstens ein Spülraum (1.8a, 1.8b) Einlassmittel und/oder Ablenkmittel zum Beeinflussen einer Strömung des Spülmediums aufweisen.

14. Handhabungsgerät nach einem der Ansprüche 1 bis 13, **dadurch gekennzeichnet, dass** das Spülmedium ein Gas oder Gasgemisch ist.

15. Handhabungsgerät nach einem der Ansprüche 1 bis 14, **gekennzeichnet durch** Luft als Spülmedium in wenigstens einem Spülraum (1.8a, 1.8b).

16. Handhabungsgerät nach einem der Ansprüche 1 bis 14, **gekennzeichnet durch** ein Inertgas als Spülmedium in wenigstens einem Spülraum (1.8a, 1.8b).

17. Handhabungsgerät nach einem der Ansprüche 1 bis 16, **gekennzeichnet durch** eine Trockeneinrichtung (2.1) für das Spülmedium.

18. Handhabungsgerät nach einem der Ansprüche 1 bis 17, **gekennzeichnet durch** eine Filtereinrichtung (2.6) für das Spülmedium.

19. Handhabungsgerät nach einem der Ansprüche 1 bis 18, **gekennzeichnet durch** eine Temperiereinrichtung (2.3) für das Spülmedium.

20. Handhabungsgerät nach einem der Ansprüche 1 bis 19, **dadurch gekennzeichnet, dass** zumindest ein Spülraum (1.8a, 1.8b) für die entsprechenden Antriebseinheiten im Bereich einer Drehachse (A₁) eines Karussells (1.2) und einer Schwenkachse (A₂) einer Schwinge (1.3) eines Sechsachs-Industrieroboters (1) angeordnet ist.

21. Handhabungsgerät nach einem der Ansprüche 1 bis 20, **dadurch gekennzeichnet, dass** zumindest ein Spülraum (1.8a, 1.8b) für die entsprechenden Antriebseinheiten eines Roboterarms (1.4) bzw. einer Roboterhand (1.5) im Bereich einer Schwenkachse (A₃) des Roboterarms (1.4) eines Sechsachs-Industrieroboters (1) angeordnet ist.

22. Verfahren zum Beeinflussen zumindest einer Umgebungsbedingung, wie Temperatur, Feuchtigkeit, Druck, Verschmutzung und/oder Keimbelastung im Bereich von Antriebseinheiten eines Handhabungsgeräts, wie eines Mehrachs-Industrieroboters, wobei eine Mehrzahl von für jeweils eine Gruppe von Antriebseinheiten vorgesehenen Spülräumen mit einem Spülmedium beaufschlagt werden, **dadurch gekennzeichnet, dass** das Spülmedium zumindest vor einem Durchströmen eines Spülraums mit einem Desinfektionsmittel versetzt wird.

23. Verfahren nach Anspruch 22, **dadurch gekennzeichnet, dass** der Spülraum mit Überdruck beaufschlagt wird.

24. Verfahren nach Anspruch 22 oder 23, **dadurch gekennzeichnet, dass** ein Zuführen und/oder Abführen des Spülmediums für jeden Spülraum separat gesteuert wird.

25. Verfahren nach einem der Ansprüche 22 bis 24, **dadurch gekennzeichnet, dass** das Spülmedium zumindest nach einem Durchströmen eines Spülraums gekühlt wird.

26. Verfahren nach einem der Ansprüche 22 bis 25, **dadurch gekennzeichnet, dass** das Spülmedium zumindest nach einem Durchströmen eines Spülraums getrocknet wird.

27. Verfahren nach einem der Ansprüche 22 bis 26, **dadurch gekennzeichnet, dass** das Spülmedium zumindest nach einem Durchströmen eines Spülraums gefiltert wird.

28. Verfahren nach einem der Ansprüche 22 bis 27, **dadurch gekennzeichnet, dass** das Spülmedium zumindest nach einem Durchströmen eines Spülraums dem Spülraum erneut zugeführt wird.

29. Verfahren nach einem der Ansprüche 22 bis 27, **dadurch gekennzeichnet, dass** das Spülmedium zumindest nach einem Durchströmen eines Spülraums an die Umgebung abgegeben wird.

30. Verfahren nach einem der Ansprüche 22 bis 29, **dadurch gekennzeichnet, dass** das Spülmedium in wenigstens einem Spülraum in eine definierte Strömungsbewegung versetzt wird.

31. Verfahren nach einem der Ansprüche 22 bis 30, **dadurch gekennzeichnet, dass** das Spülmedium wenigstens einem Spülraum mit einem gegenüber einem Umgebungsdruck erhöhten Druck zugeführt wird.

32. Verfahren nach einem der Ansprüche 22 bis 30, **dadurch gekennzeichnet, dass** das Spülmedium wenigstens einem Spülraum mit einem gegenüber einem Umgebungsdruck verminderten Druck zugeführt wird.

## Claims

1. Manipulator, such as a multiaxial industrial robot, particularly for use in a contamination-endangered environment, with a plurality of scavenging areas subject to the action of a scavenging medium in the vicinity of the drive units of the manipulator, with a plurality of groups of drive units is in each case associated an individual scavenging area (1.8a, 1.8b), **characterized in that**, in at least one scavenging area (1.8a, 1.8b) the scavenging medium is mixed with disinfecting substances.

2. Manipulator according to claim 1, wherein pressure is supplied to the scavenging areas (1.8a, 1.8b).

3. Manipulator according to claim 1 or 2, wherein the scavenging medium can be supplied and/or removed by hoses (1.6, 1.7a, 1.7b) positioned externally on the manipulator (1).

4. Manipulator according to claim 1 to 3, wherein a plurality of supply and/or removal hoses (1.7a, 1.7b) are laid together with a cable arrangement for the supply and control of the drive units.

5. Manipulator according to claim 3 or 4, wherein the scavenging medium can be removed by means of a protective hose (1.6) of the cable arrangement.

6. Manipulator according to claim 2 to 4, wherein the supply and removal hoses (1.6, 1.7a, 1.7b) for at least one scavenging area (1.8a, 1.8b) form a closed circuit.

7. Manipulator according to claim 2 to 4, wherein a scavenging medium removed from at least one scavenging area (1.8a, 1.8b) can be delivered to the environment.

8. Manipulator according to claim 1 to 6, wherein a pressure of the scavenging medium is separately controllable in each scavenging area (1.8a, 1.8b).

9. Manipulator according to claim 1 to 7, wherein the pressure of the scavenging medium in at least one scavenging area (1.8a, 1.8b) is above ambient pressure.

10. Manipulator according to claim 1 to 8, wherein the overpressure is 0.1 to 1.0. bar.

11. Manipulator according to claim 1 to 9, wherein the scavenging medium pressure in at least one scavenging area (1.8a, 1.8b) is below ambient pressure.

12. Manipulator according to claim 1 to 10, wherein the scavenging medium from at least one scavenging area (1.8a, 1.8b) can be sucked off by means of a suction device.

13. Manipulator according to claim 1 to 12, wherein at least one scavenging area (1.8a, 1.8b) has inlet means and/or deflecting means for influencing a scavenging medium flow.

14. Manipulator according to claim 1 to 13, wherein the scavenging medium is a gas or gaseous mixture.

15. Manipulator according to claim 1 to 14, wherein air is used as the scavenging medium in at least one scavenging area (1.8a, 1.8b).

16. Manipulator according to claim 1 to 14, wherein inert gas is used as the scavenging medium in at least one scavenging area (1.8a, 1.8b).

17. Manipulator according to claim 1 to 16, wherein there is a drying device (2.1) for the scavenging medium.

18. Manipulator according to claim 1 to 17, wherein there is a filtering device (2.6) for the scavenging medium.

19. Manipulator according to claim 1 to 18, wherein an air conditioning device (2.3) is provided for the scavenging medium.

20. Manipulator according to claim 1 to 19, wherein at least one scavenging area (1.8a, 1.8b) for the corresponding drive units is located in the vicinity of a rotation axis (A₁)of a carrousel (1.2) and a swivelling axis (A₂) of a rocker (1.3) of a six-axial industrial robot (1).

21. Manipulator according to claim 1 to 20, wherein at least one scavenging area (1.8a, 1.8b) for the corresponding drive units of a robot arm (1.4) or robot hand (1.5) is located in the vicinity of a swivelling axis (A₃) of the robot arm (1.4) of a six-axial industrial robot (1).

22. Method for influencing at least one ambient condition, such as temperature, moisture, pressure, contamination and/or bacterial presence in the vicinity of drive units of a manipulator, such as a multiaxial industrial robot, wherein a plurality of scavenging areas in each case provided for a group of drive units can be supplied with a scavenging medium, **characterized in that**, at least prior to flowing through a scavenging area, the scavenging medium is mixed with a disinfectant.

23. Method according to claim 22, wherein the scavenging area can be supplied with overpressure.

24. Method according to claim 22 or 23, wherein a supply and/or removal of scavenging medium is separately controlled for each scavenging area.

25. Method according to claim 22 to 24, wherein the scavenging medium is cooled, at least after flowing through a scavenging area.

26. Method according to claim 22 to 25, wherein, at least after flowing through a scavenging area, the scavenging medium is dried.

27. Method according to claim 22 to 26, wherein, at least after flowing through a scavenging area, the scavenging medium is filtered.

28. Method according to claim 22 to 27, wherein, at least after flowing through a scavenging area, the scavenging medium is again supplied to the scavenging area.

29. Method according to claim 22 to 27, wherein, at least after flowing through a scavenging area, the scavenging medium is led off into the environment.

30. Method according to claim 22 to 29, wherein in at least one scavenging area, the scavenging medium is given a clearly defined flow movement.

31. Method according to claim 22 to 30, wherein the scavenging medium is supplied to at least one scavenging area with a pressure above ambient pressure.

32. Method according to claim 22 to 30, wherein, the scavenging medium is supplied to at least one scavenging area with a pressure lower than ambient pressure.

## Revendications

1. Manipulateur, tel qu'un robot industriel à plusieurs axes, notamment pour une utilisation dans un environnement à risque de contamination, avec un certain nombre d'enceintes de rinçage pouvant être alimentées en agent de rinçage dans la zone des unités motrices du manipulateur, une enceinte de rinçage (1.8a, 1.8b) individuelle étant respectivement associée à une pluralité de groupes d'unités motrices, **caractérisé en ce que** l'agent de rinçage est mélangé à des substances désinfectantes dans au moins une enceinte de rinçage (1.8a, 1.8b).

2. Manipulateur selon la revendication 1, **caractérisé en ce que** les enceintes de rinçage (1.8a, 1.8b) sont alimentées en pression.

3. Manipulateur selon la revendication 1 ou 2, **caractérisé en ce que** l'agent de rinçage peut être amené et/ou évacué par l'intermédiaire de flexibles (1.6, 1.7a, 1.7b) disposés à l'extérieur du manipulateur (1).

4. Manipulateur selon l'une quelconque des revendications 1 à 3, **caractérisé en ce qu'**un certain nombre de flexibles d'amenée et/ou d'évacuation (1.7a, 1.7b) sont transférés conjointement avec un agencement de câbles pour alimenter et commander les unités motrices.

5. Manipulateur selon la revendication 3 ou 4, **caractérisé en ce que** l'agent de rinçage peut être évacué par l'intermédiaire d'un flexible de protection (1.6) de l'agencement de câbles.

6. Manipulateur selon l'une quelconque des revendications 2 à 4, **caractérisé en ce que** les flexibles d'amenée et d'évacuation (1.6, 1.7a, 1.7b) forment un circuit fermé pour au moins une enceinte de rinçage (1.8a, 1.8b).

7. Manipulateur selon l'une quelconque des revendications 2 à 4, **caractérisé en ce qu'**un agent de rinçage évacué hors d'au moins une enceinte de rinçage (1.8a, 1.8b) peut être renvoyé dans l'environnement.

8. Manipulateur selon l'une quelconque des revendications 1 à 6, **caractérisé en ce que** la pression de l'agent de rinçage peut être commandée séparément dans chaque enceinte de rinçage (1.8a, 1.8b).

9. Manipulateur selon l'une quelconque des revendications 1 à 7, **caractérisé en ce que** la pression de l'agent de rinçage est supérieure à la pression ambiante dans au moins une enceinte de rinçage (1.8a, 1.8b).

10. Manipulateur selon l'une quelconque des revendications 1 à 8, **caractérisé en que** la surpression est de 0,1-1,0 bar.

11. Manipulateur selon l'une quelconque des revendications 1 à 9, **caractérisé en ce que** la pression de l'agent de rinçage est inférieure à la pression ambiante dans au moins une enceinte de rinçage (1.8a, 1.8b).

12. Manipulateur selon l'une quelconque des revendications 1 à 10, **caractérisé en ce que** l'agent de rinçage peut être aspiré hors d'au moins une enceinte de rinçage (1.8a, 1.8b) à l'aide d'un dispositif d'aspiration.

13. Manipulateur selon l'une quelconque des revendications 1 à 12, **caractérisé en ce qu'**au moins une enceinte de rinçage (1.8a, 1.8b) présente des moyens d'admission et/ou des moyens de déviation pour influer sur un écoulement de l'agent de rinçage.

14. Manipulateur selon l'une quelconque des revendications 1 à 13, **caractérisé en ce que** l'agent de rinçage est un gaz ou un mélange gazeux.

15. Manipulateur selon l'une quelconque des revendications 1 à 14, **caractérisé en ce que** c'est de l'air qui sert d'agent de rinçage dans au moins une enceinte de rinçage (1.8a, 1.8b).

16. Manipulateur selon l'une quelconque des revendications 1 à 14, **caractérisé en ce que** c'est un gaz inerte qui sert d'agent de rinçage dans au moins une enceinte de rinçage (1.8a, 1.8b).

17. Manipulateur selon l'une quelconque des revendications 1 à 16, **caractérisé par** un dispositif de séchage (2.1) pour l'agent de rinçage.

18. Manipulateur selon l'une quelconque des revendications 1 à 17, **caractérisé par** un dispositif de filtrage (2.6) pour l'agent de rinçage.

19. Manipulateur selon l'une quelconque des revendications 1 à 18, **caractérisé par** un dispositif de chambrage pour l'agent de rinçage.

20. Manipulateur selon l'une quelconque des revendications 1 à 19, **caractérisé en ce qu'**au moins une enceinte de rinçage (1.8a, 1.8b) est disposée pour les unités motrices correspondantes dans la zone d'un axe de rotation (A₁) d'un élément tournant (1.2) et d'un axe oscillant (A₂) d'une manivelle oscillante (1.3) d'un robot industriel à six axes (1).

21. Manipulateur selon l'une quelconque des revendications 1 à 20, **caractérisé en ce qu'**au moins une enceinte de rinçage (1.8a, 1.8b) est disposée pour les unités motrices correspondantes d'un bras de robot (1.4) et/ou d'une main de robot (1.5) dans la zone d'un axe oscillant (A₃) du bras de robot (1.4) d'un robot industriel à six axes (1).

22. Procédé pour influencer au moins un paramètre ambiant, tel que la température, l'humidité, la pression, la pollution et/ou la résistance des germes dans la zone des unités motrices d'un manipulateur, tel qu'un robot industriel à plusieurs axes, une pluralité d'enceintes de rinçage prévues respectivement pour un groupe d'unités motrices étant alimentées en agent de rinçage, **caractérisé en ce que** l'agent de rinçage est mélangé à un moyen désinfectant au moins avant traversée d'une enceinte de rinçage.

23. Procédé selon la revendication 22, **caractérisé en ce que** l'enceinte de rinçage est alimentée en surpression.

24. Procédé selon la revendication 22 ou 23, **caractérisé en ce qu'**une amenée et/ou un refoulement de l'agent de rinçage sont commandés séparément pour chaque enceinte de rinçage.

25. Procédé selon l'une quelconque des revendications 22 à 24, **caractérisé en ce que** l'agent de rinçage est refroidi au moins après traversée d'une enceinte de rinçage.

26. Procédé selon l'une quelconque des revendications 22 à 25, **caractérisé en ce que** l'agent de rinçage est séché au moins après traversée d'une enceinte de rinçage.

27. Procédé selon l'une quelconque des revendications 22 à 26, **caractérisé en ce que** l'agent de rinçage est filtré au moins après traversée d'une enceinte de rinçage.

28. Procédé selon l'une quelconque des revendications 22 à 27, **caractérisé en ce que** l'agent de rinçage est amené de façon renouvelée à l'enceinte de rinçage au moins après traversée d'une enceinte de rinçage.

29. Procédé selon l'une quelconque des revendications 22 à 27, **caractérisé en ce que** l'agent de rinçage est renvoyé dans l'environnement au moins après traversée d'une enceinte de rinçage.

30. Procédé selon l'une quelconque des revendications 22 à 29, **caractérisé en ce que** l'agent de rinçage est transféré dans au moins une enceinte de rinçage selon un mouvement d'écoulement défini.

31. Procédé selon l'une quelconque des revendications 22 à 30, **caractérisé en ce que** l'agent de rinçage est amené à une pression supérieure à la pression ambiante au moins à une enceinte de rinçage.

32. Procédé selon l'une quelconque des revendications 22 à 30, **caractérisé en ce que** l'agent de rinçage est amené à une pression inférieure à la pression ambiante au moins à une enceinte de rinçage.
